**Europäisches Patentamt**

**European Patent Office**

**Office européen des brevets**

(19)

(11) Numéro de publication: **0 1 1 7 9 9 1**
**B1**

(12) ## FASCICULE DE BREVET EUROPEEN

(45) Date de publication du fascicule du brevet:
16.09.87

(51) Int. Cl.⁴: **B 27 G 13/00**

(21) Numéro de dépôt: **84100652.1**

(22) Date de dépôt: **23.01.84**

(54) **Outil de coupe à couteaux amovibles.**

(30) Priorité: **09.02.83 CH 720/83**

(43) Date de publication de la demande:
**12.09.84 Bulletin 84/37**

(45) Mention de la délivrance du brevet:
**16.09.87 Bulletin 87/38**

(84) Etats contractants désignés:
**AT BE CH DE FR GB IT LI LU NL SE**

(56) Documents cités:
**CH - A - 638 131**
**DE - B - 1 195 934**
**DE - C - 915 265**
**DE - C - 960 668**
**FR - A - 766 802**
**FR - A - 2 058 652**
**FR - A - 2 477 460**
**US - A - 3 986 543**

(73) Titulaire: **SAMVAZ S.A., CH-1801 Fenil-Sur-Vevey (CH)**

(72) Inventeur: **Derivaz, Charles, Chemin des Murets 12,
CH-1814 La Tour-de-Peilz (CH)**

(74) Mandataire: **Micheli, Michel-Pierre et al, MICHELI &
CIE 118, Rue du Rhône Case Postale 47,
CH-1211 Genève 6 (CH)**

## Description

La présente invention se rapporte à un outil de coupe à couteaux amovibles, utilisable par exemple comme rabot à bois.

Les outils de coupe connus du type précité, tels que divulgués par exemple dans le document DE-C 1 195 934, comportent un corps porte-outils massif qui présente des logements destinés à recevoir des couteaux fixés au moyen de dispositifs de blocage également disposés dans chaque logement et nécessitant le contrôle individuel de la force de serrage de chaque moyen de fixation et de la position de chaque couteau, ce qui constitute une opération délicate et longue à réaliser.

On connaît également, notamment du brevet DE-C 960 668 un outil de coupe à couteaux amovibles qui comporte un empilage de disques présentant chacun plusieurs découpes débouchant sur sa périphérie, la position angulaire des disques les uns par rapport aux autres étant telle, en position de service, que les découpes forment des logements longitudinaux périphériques, et des couteaux, dont l'arête de coupe est située sur un diamètre plus grand que le diamètre extérieur des disques, fixés dans les logements au moyen d'un organe de blocage agissant perpendiculairement auxdits couteaux et bloquant ceux-ci en position de service.

Le but de cette invention consiste par conséquent à fournir un outil de coupe à couteaux amovibles, obviant aux inconvénients ci-dessus des outils connus, et dans lequel les couteaux sont tous simultanément et automatiquement positionnés et bloqués en position de service.

L'outil de coupe à couteaux amovibles, objet de la présente invention, visant à atteindre le but précité, présente les caractéristiques énoncés dans la revendication 1.

La présente invention sera maintenant décrite plus en détails en référence au dessin annexé illustrant schématiquement et à titre d'exemple une forme d'exécution de l'outil de coupe.

La fig. 1 est une vue partielle en perspective illustrant l'organe de blocage respectivement en position hors-service (A) et en position de service (B).

La fig. 2 est une vue partielle en perspective d'un couteau.

La fig. 3 est une vue latérale générale et partiellement en coupe de l'outil.

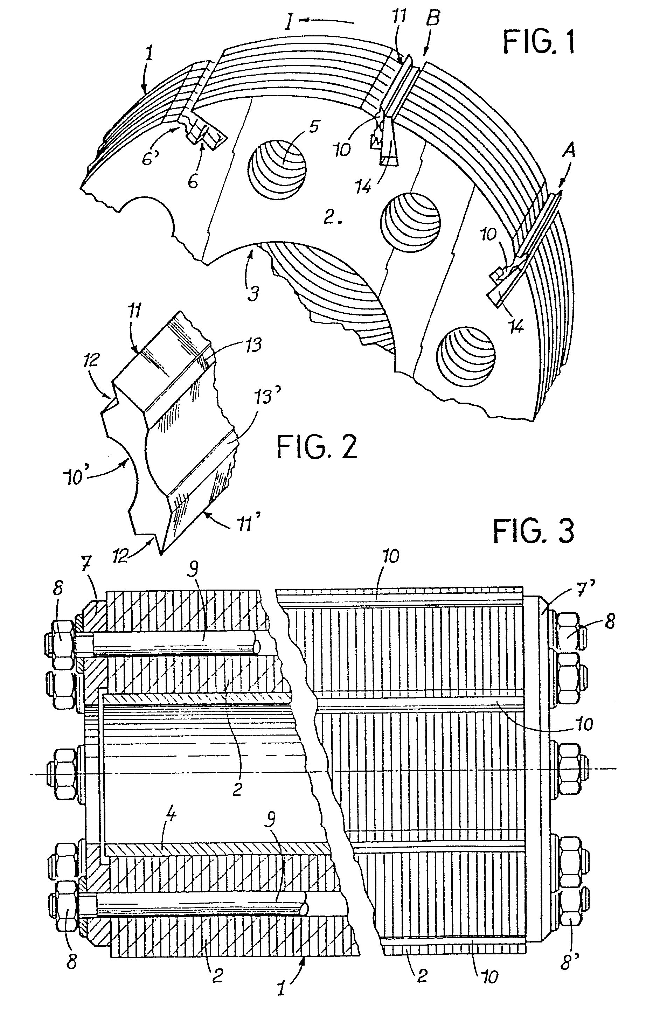

L'outil de coupe tel qu'illustré sur les figures 1 et 3 comporte un empilage 1 de disques 2, de préférence métalliques, par exemple en aluminium, en fer, en laiton ou en un autre alliage approprié. Chaque disque 2 présente une ouverture centrale 3 permettant de l'enfiler sur un tube 4 destiné à être enfilé et fixé sur l'axe rotatif (non montré) d'une machine ou d'un moteur, ainsi que des ouvertures 5 destinées d'une part à alléger le disque et d'autre part à la mise en position de service de l'outil comme cela sera décrit plus loin. Enfin, chaque disque 2 présente des découpes 6 réparties sur la périphérie du disque, débouchant sur celle-ci.

L'empilage 1 de disques 2 est donc monté sur le tube 4, entre deux plaquettes d'extrémité 7,7' et comprimé par serrage au moyen de boulons 8,8' vissés sur les extrémités filetées de tiges de serrage 9 passant dans les ouvertures 5.

Enfin, l'outil de coupe comporte des couteaux amovibles 10, généralement en acier rapide, et qui présentent deux arrêtes libres affûtées de façon appropriée pour constituer chacune une arrête de coupe 11,11'. Chaque couteau 10 est donc réversible et présente en outre deux brise-copeaux 12 longitudinaux sur sa face frontale et deux plats 13,13' sur sa face dorsale (fig. 2).

Chaque couteau 10 est introduit avec jeu dans un logement longitudinal formé par la superposition des découpes 6, contre la face antérieure de celui-ci, et maintenu dans ce logement par un organe de blocage constitué ici par un coin allongé 14. Bien entendu, la forme de la face antérieure 6' du logement 6 correspond à celle de la face frontale 10' du couteau 10. Le coin allongé 14 est également introduit avec jeu dans le même logement 6, parallèlement au couteau 10, et de telle sorte que sa face frontale soit en contact avec les deux plats 13,13' que présente la face dorsale dudit couteau 10.

De préférence, les couteaux 10 et les coins de blocage 14 sont constitués par des profilés en acier obtenus par laminage.

Comme illustré sur la figure 1, le coin longitudinal 12 est disposé au fond du logement 6 lorsque l'outil est au repos (A). Par contre, dès que l'outil est entraîné en rotation selon la flèche I, la force centrifuge agit sur le coin 14 pour le pousser radialement vers l'extérieur du logement 6, ce qui provoque une pression de la face frontale du coin 14 sur les plats 13,13' du couteau 10, de manière à bloquer celui-ci en position de service (B) par coincement contre la face antérieure 6' du logement 6.

Ainsi, le positionnement et le blocage de tous les couteaux 10 de l'outil sont obtenus automatiquement par coincement au moyen des coins longitudinaux 14 dès la mise en rotation de l'outil, le serrage en position des couteaux étant donc d'autant meilleur que la vitesse de rotation est élevée.

L'outil de coupe à couteaux amovibles selon l'invention présente par rapport aux dispositifs connus de ce type les avantages suivants:

– il ne nécessite pas l'ajustage précis de chaque couteau, tous les couteaux étant simultanément positionnés et bloqués par la force centrifuge agissant sur les coins longitudinaux;

– il est pratique et économique à l'usage, étant donné que chaque couteau comportant deux arrêtes affûtées peut être utilisé deux fois, en le retournant avant d'être remplacé par un nouveau;

– la longueur de l'empilage de disques n'est pas limitée, plusieurs couteaux de même forme pouvant être introduits les uns derrière les autres dans le même logement longitudinal;

– sa fabrication est aisée et peu coûteuse, puisque les disques tous de même forme peuvent être réalisés par découpage automatisé dans des plaques minces d'aluminium, de laiton ou autres alliages appropriés et que les couteaux sont de conception simple; de plus, les couteaux et les coins de blocage peuvent être obtenus sous forme de profilés par laminage; et

– son utilisation est moins bruyante, les vides nécessaires dans les outils connus pour acéder aux dispositifs de positionnement et le serrage individuels étant supprimés.

L'outil de coupe selon l'invention est plus particulièrement approprié pour être utilisé comme rabot à bois.

## Revendications

1. Outil de coupe à couteaux amovibles comportant un empilage (1) de disques (2) présentant chacun au moins une découpe débouchant sur sa périphérie, un dispositif de serrage comprimant l'empilage de disques, la position angulaire des disques les uns par rapport aux autres étant telle, en position de service, que les découpes forment au moins un logement (6) longitudinal périphérique, et au moins un couteau (10), dont l'arrête de coupe (11) est située sur un diamètre plus grand que le diamètre extérieur des disques et qui est fixé dans au moins un des logements au moyen d'un organe de blocage bloquant celui-ci en position de service, caractérisé par le fait que la face frontale des logements (6) formés par les découpes périphériques est pourvue d'une nervure (6') de guidage qui est en prise avec une gorge (10') de positionnement correspondante que présente la face frontale des couteaux (10), et par le fait que les organes de blocage sont constitués par des coins allongés (14) disposés dans lesdits logements parallèlement aux couteaux et dont la face frontale s'appuie contre la face dorsale de ceux-ci par l'action de la force centrifuge, lorsque l'outil est entraîné en rotation, provoquant ainsi simultanément le positionnement et le blocage par coincement de tous les couteaux.

2. Outil selon la revendication 1, caractérisé par le fait que le dispositif de serrage comporte une plaque (7, 7') à chaque extrémité de l'empilage de disques, ces plaques étant solidaires en position de service des moyens d'entraînement en rotation de l'outil et reliées l'une à l'autre par des tiges de serrage (9).

3. Outil selon la revendication 2, caractérisé par le fait que chaque disque présente une ouverture centrale (3) et est monté sur un tube (4) destiné à coopérer avec des moyens d'entraînement en rotation de l'outil et passant par cette ouverture, et par le fait que les tiges de serrage (9) sont disposées longitudinalement à l'intérieur de l'empilage à travers des ouvertures (5) correspondantes pratiquées dans lesdites plaques d'extrémité et dans les disques.

4. Outil selon l'une des revendicatios 1 à 3, caractérisé par le fait que chaque couteau (10) comporte au moins une arrête longitudinale (11) affûtée et au moins un brise-copeaux (12) longitudinal.

5. Outil selon la revendication 4, caractérisé par le fait que les couteaux (10) sont réversibles et sont constitués chacun par une lame, dont les deux arrêtes longitudinales (11) sont affûtées et qui présente au moins un plat de positionnement (13, 13') longitudinal sur sa face dorsale, et deux brise-copeaux (12) longitudinaux sur sa face frontale, de chaque côté de ladite gorge (10') de positionnement.

6. Outil selon l'une des revendications 1 à 5, caractérisé par le fait que chaque logement (6) a des dimensions telles que les couteaux (10) et les organes de blocage (14) puissent être logés avec jeu dans les logements longitudinaux formés par des découpes.

7. Outil selon l'une des revendications 1 à 6, caractérisé par le fait que les couteaux et/ou les organes de blocage sont constitués par des profilés obtenus par laminage.

## Claims

1. Cutting tool with removable knives comprising a stack (1) of discs (2) having each at least a notch opening on its periphery, a tightening device compressing the stack of discs, the angular position of the discs the ones with respect to the others being such, in service position, that the notches form at least one peripheric longitudinal housing (6) and at least one knife (10), the cutting edge (11) of which is located on a diameter greater than the outside diameter of the discs and which is fixed in at least one of the housings by means of a locking member locking it in serivce position, characterized by the fact that the frontal face of the housings (6) formed by the peripheric notches is provided with a guiding rib (6') which meshes with a corresponding positioning groove (10') provided on the frontal face of the knives (10), and by the fact that the locking members are made by elongated wedges (14) located in said housings parallel to said knives and the front face of which rests against their rear face through the action of the centrifugal force, when the tool is driven in rotation, causing thus simultaneously the positioning and the locking through wedging of all knives.

2. Tool according to claim 1, characterized by the fact that the tightening device comprises a plate (7, 7') at each end of the stack of discs, these plates being in service position fast with means for driving the tool in rotation and connected the one to the other by means of tightening rods (9).

3. Tool according to claim 2, characterized by the fact that each disc has a central opening (3) and is mounted on a tube (4) intended to cooperate with the means for driving the tool in rotation and passing through said opening, and by the fact that the tightening rods (9) are located longitudinally within the stack through corresponding openings (5) provided in the said end plates and the discs.

4. Tool according to one of claims 1 to 3, characterized by the fact that each knife (10) comprises at least one longitudinal sharpened edge (11) and at least one longitudinal chip-breaker (12).

5. Tool according to claim 4, characterized by the fact that the knives (10) are reversible and each constituted by a blade, the two longitudinal edges (11) of which are sharpened and which has at least one positioning longitudinal flat (13, 13'), and two longitudinal chip-breakers (12) on its frontal face, on each side of said positioning groove (10').

6. Tool according to one of claims 1 to 5, characterized by the fact that each housing (6) has dimensions such that the knives (10) and the locking members (14) can be located with play in the longitudinal housings formed by the notches.

7. Tool according to one of claims 1 to 6, characterized by the fact that the knives and/or the locking members are formed by laminated profiles.

Patentansprüche

1. Schneidwerkzeug mit lösbaren Messern, mit einem Stapel (1) aus Platten (2), die je zumindest einen in ihren Umfang mündenden Ausschnitt aufweisen, mit einer Spannvorrichtung zum Zusammenpressen des Stapels, wobei die Winkelstellung der Scheiben relativ zueinander in der Arbeitsstellung so gewählt ist, dass die Ausschnitte umfangsseitig zumindest einen Längssitz (6) bilden, und mit zumindest einem Messer (10), dessen Schneidkante (11) auf einem grösseren Durchmesser liegt als der Aussendurchmesser der Scheiben und das in zumindest einem der Sitze mit Hilfe eines Blockierorganes fixiert ist, welches das Messer in der Arbeitsstellung hält, dadurch gekennzeichnet, dass die Vorderseite der Sitze (6), welche von den Umfangsausschnitten gebildet sind, mit einer Führungsrippe (6') versehen ist, die mit einer zugeordneten Positioniernut (10') der Stirnseite des Messers (10) in Eingriff steht, und dass die Blockierorgane durch langgestreckte Keile (14) gebildet sind, die in den Sitzen parallel zu den Messern angeordnet sind und deren Vorderseite an der Rückseite der Messer unter Wirkung der Zentrifugalkraft angreifen, wenn das Werkzeug in Drehung versetzt wird, wobei auf diese Weise zugleich die Positionierung und die Blockierung aller Messer durch Verkeilen erfolgt.

2. Werkzeug nach Anspruch 1, dadurch gekennzeichnet, dass die Spannvorrichtung an jedem Ende des Scheibenstapels eine Platte (7, 7') aufweist, wobei die Platten in der Arbeitsstellung mit Drehantriebsmitteln des Werkzeuges verbunden sind und miteinander durch Spannstangen (9) in Verbindung stehen.

3. Werkzeug nach Anspruch 2, dadurch gekennzeichnet, dass jede Scheibe eine zentrale Öffnung (3) aufweist und auf einem Rohr (4) montiert ist, das mit den Drehantriebsmitteln des Werkzeugs zusammenwirkt und diese Öffnung durchsetzt, und dass die Spannstangen (9) der Länge nach im Inneren des Stapels angeordnet sind und zugeordnete, in den Endplatten und in den Scheiben ausgebildete Öffnungen (5) durchsetzen.

4. Werkzeug nach einem der Ansprüche 1 bis 3, dadurch gekennzeichnet, dass jedes Messer (10) zumindest eine geschliffene Längskante (11) und zumindest einen Längsspanbrecher (12) aufweist.

5. Werkzeug nach Anspruch 4, dadurch gekennzeichnet, dass die Messer (10) reversibel sind und je aus einer Klinge bestehen, deren beide Längskanten (11) geschliffen sind und die an ihrer Hinterseite zumindest eine zur Positionierung dienende Längsabflachung (14, 13') aufweist, sowie zwei Längsspanbrecher (12) an ihrer Vorderseite, zu beiden Seiten der Positioniernut (10').

6. Werkzeug nach einem der Ansprüche 1 bis 5, dadurch gekennzeichnet, dass jeder Sitz (6) solche Abmessungen hat, dass die Messer (10) und die Blockierorgane (14) mit Spiel in den durch die Ausschnitte gebildeten Längssitzen angeordnet werden können.

7. Werkzeug nach einem der Ansprüche 1 bis 6, dadurch gekennzeichnet, dass die Messer und/ oder die Blockierorgane aus Walzprofilen bestehen.

0 117 991

FIG. 1

FIG. 2

FIG. 3

5